# EUROPEAN PATENT APPLICATION

(11) **EP 4 848 240 A1**
(43) Date of publication of application: **02.12.2026**
(21) Application number: 25767220.4
(22) Date of filing: 25.02.2025
(51) Int. Cl.: G06V 40/20

(54) **FEATURE EXTRACTION MODEL TRAINING METHOD, FEATURE EXTRACTION MODEL APPLICATION METHOD, AND RELATED APPARATUS**

(30) Priority: 07.03.2024 CN 202410261643
(71) Applicant: Tencent Technology (Shenzhen) Company Limited, Shenzhen, Guangdong 518057 (CN)
(72) Inventor: ZHANG, Yingyi, Shenzhen, Guangdong 518057 (CN); JIA, Qiong, Shenzhen, Guangdong 518057 (CN); ZHANG, Ruixin, Shenzhen, Guangdong 518057 (CN); DING, Shouhong, Shenzhen, Guangdong 518057 (CN)
(74) Representative: Nederlandsch Octrooibureau
(86) International application number: PCT/CN2025/079017
(87) International publication number: WO 2025/185480

(57) **Abstract**

Embodiments of the present application disclose a feature extraction model training method, a feature extraction model application method, and a related apparatus. The feature extraction model training method comprises: performing feature extraction on an image sample by means of an initial feature extraction model to obtain the features of key points; on the basis of the features of the key points, determining the probability distributions of the key points; performing sampling on the plurality of probability distributions to obtain a plurality of samples; fitting the plurality of samples by means of an initial normalizing flow model to obtain a simulated probability distribution; and on the basis of a difference between the simulated probability distribution and a real probability distribution, adjusting the model parameters of the initial normalizing flow model and the model parameters of the initial feature extraction model to obtain a feature extraction model. The input data and output data of an overall model composed of a normalizing flow model and the feature extraction model are in the same spatial dimension, and the overall model is trained, so that the capability of capturing intrinsic information of an image by the feature extraction model is improved, thereby improving the accuracy of the position coordinates of the key points.

## Description

### RELATED APPLICATION

This application claims priority to Chinese Patent Application No. 2024102616435, filed with the China National Intellectual Property Administration on March 7, 2024, and entitled "TRAINING METHOD AND RELATED APPARATUS FOR FEATURE EXTRACTION MODEL".

### FIELD OF THE TECHNOLOGY

This application relates to the field of image processing technologies, and in particular, to a feature extraction technology.

### BACKGROUND OF THE DISCLOSURE

Pose estimation is configured for predicting position coordinates of predefined key points on an entity, to identify a pose of the entity by using the position coordinates of the key points. For example, human pose estimation is a process in which joints such as a head, shoulders, and elbows are used as key points for identification, to determine a human pose based on position coordinates of the key points.

In a related art, a pose estimation manner based on regression is generally used, to be specific, position coordinates of key points in a to-be-identified image are obtained through prediction by using a regression model based on the to-be-identified image, to determine a pose based on the position coordinates of the key points. However, accuracy of the position coordinates of the key points determined in this manner is low.

### SUMMARY

To resolve the foregoing technical problem, this application provides a training method, an application method, and a related apparatus for a feature extraction model, to improve accuracy of position coordinates of key points.

Embodiments of this application disclose the following technical solutions:
According to one aspect, an embodiment of this application provides a method for training a feature extraction model for pose identification. The method includes:
obtaining a sample image including a plurality of key points, the key points having ground truth position coordinates and defining a pose of an object in the sample image;
performing feature extraction on the sample image by using an initial feature extraction model, to obtain features respectively corresponding to the plurality of key points;
determining, based on the features respectively corresponding to the plurality of key points, probability distributions respectively corresponding to the plurality of key points, the probability distribution describing probabilities that a respective key points is at various positions in the sample image;
performing sampling on the plurality of probability distributions, to obtain a plurality of samples;
performing fitting based on the plurality of samples by using an initial normalizing flow model, to obtain simulated probability distributions; and
adjusting a model parameter of the initial normalizing flow model and a model parameter of the initial feature extraction model based on a difference between the simulated probability distribution and a ground truth probability distribution, to obtain a feature extraction model corresponding to the initial feature extraction model, the ground truth probability distribution being determined based on the ground truth position coordinate of the key point corresponding to a respective one of the plurality of samples.

According to another aspect, an embodiment of this application provides an application method for a feature extraction model for pose identification. The method includes:
obtaining a to-be-identified image;
performing feature extraction on the to-be-identified image by using the feature extraction model, to obtain features respectively corresponding to a plurality of to-be-identified key points included in the to-be-identified image, the feature extraction model being obtained through training by using the foregoing method for training the feature extraction model;
determining, based on the features respectively corresponding to the plurality of to-be-identified key points, probability distributions respectively corresponding to the plurality of to-be-identified key points; and
determining, based on the probability distributions respectively corresponding to the plurality of to-be-identified key points, position coordinates of the plurality of to-be-identified key points in the to-be-identified image.

According to another aspect, an embodiment of this application provides an apparatus for training a feature extraction model for pose identification. The apparatus includes: an obtaining unit, a feature extraction unit, a conversion unit, a sampling unit, a fitting unit, and an adjustment unit;
the obtaining unit being configured to obtain a sample image including a plurality of key points, the key points having ground truth position coordinates and defining a pose of an object in the sample image;
the feature extraction unit being configured to perform feature extraction on the sample image by using an initial feature extraction model, to obtain features respectively corresponding to the plurality of key points;
the conversion unit being configured to determine, based on the features respectively corresponding to the plurality of key points, probability distributions respectively corresponding to the plurality of key points, the probability distribution describing probabilities that a respective key point is at various positions in the sample image;
the sampling unit being configured to perform sampling on a plurality of probability distributions, to obtain a plurality of samples;
the fitting unit being configured to perform fitting based on the plurality of samples by using an initial normalizing flow model, to obtain simulated probability distributions; and
the adjustment unit being configured to adjust a model parameter of the initial normalizing flow model and a model parameter of the initial feature extraction model based on a difference between the simulated probability distribution and a ground truth probability distribution, to obtain a feature extraction model corresponding to the initial feature extraction model, the ground truth probability distribution being determined based on the ground truth position coordinate of the key point corresponding to a respective one of the plurality of samples.

According to another aspect, an embodiment of this application provides an application apparatus for a feature extraction model for pose identification. The apparatus includes: an obtaining unit, a feature extraction unit, a conversion unit, and an identification unit;
the obtaining unit being configured to obtain a to-be-identified image;
the feature extraction unit being configured to perform feature extraction on the to-be-identified image by using the feature extraction model, to obtain features respectively corresponding to a plurality of to-be-identified key points included in the to-be-identified image, the feature extraction model being obtained through training by using the foregoing method for training the feature extraction model;
the conversion unit being configured to determine, based on the features respectively corresponding to the plurality of to-be-identified key points, probability distributions respectively corresponding to the plurality of to-be-identified key points; and
the identification unit being configured to determine, based on the probability distributions respectively corresponding to the plurality of to-be-identified key points, position coordinates of the plurality of to-be-identified key points in the to-be-identified image.

According to another aspect, an embodiment of this application provides a computer device, including a processor and a memory:
the memory being configured to store a computer program and transmit the computer program to the processor; and
the processor being configured to perform the method according to the foregoing aspect based on instructions in the computer program.

According to another aspect, an embodiment of this application provides a computer-readable storage medium, configured to store a computer program, the computer program being configured for performing the method according to the foregoing aspect.

According to another aspect, an embodiment of this application provides a computer program product or a computer program, the computer program product or the computer program including computer instructions, and the computer instructions being stored in a computer-readable storage medium. A processor of a computer device reads the computer instructions from the computer-readable storage medium, and the processor executes the computer instructions, so that the computer device performs the method according to the foregoing aspect.

In the foregoing technical solution, the sample image is obtained, and the sample image includes the plurality of key points having the ground truth position coordinates, to obtain the ground truth probability distributions based on the ground truth position coordinates of the plurality of key points. The feature extraction is performed on the sample image by using the initial feature extraction model, to obtain the features of the key points. To avoid a case in which input data and output data are not in the same spatial dimension, the position coordinates of the key points are no longer directly predicted based on the features of the key points in this application, but the probabilities that the key point is at various positions in the sample image are determined based on the feature of the key point, that is, probability distributions of key points are obtained. The plurality of samples are obtained by performing sampling on the plurality of probability distributions, and the plurality of samples are fitted by using the initial normalizing flow model, to obtain the simulated probability distributions, which is equivalent to converting the position coordinates of the key points into probability distributions on an image plane space, thereby prompting the input data and the output data to be in the same spatial dimension.

To enable the simulated probability distribution outputted by the initial normalizing flow model to approach the ground truth probability distribution, not only can the model parameter of the initial normalizing flow model be adjusted, to improve a data fitting capability of the initial normalizing flow model, but also the model parameter of the initial feature extraction model can be adjusted, to make the input data of the initial normalizing flow model more real. In other words, the model parameter of the initial normalizing flow model and the model parameter of the initial feature extraction model are adjusted based on the difference between the simulated probability distribution and the ground truth probability distribution, to correspondingly obtain the normalizing flow model and the feature extraction model. Therefore, input data and output data of an overall model including the initial normalizing flow model and the initial feature extraction model are in the same spatial dimension. The overall model is trained, and the feature extraction model corresponding to the initial feature extraction model in the overall model is obtained. A capability of the feature extraction model to capture internal information in an image in a training process is improved, in other words, a representation capability to capture distributions of position coordinates of underlying key points is improved. Correspondingly, accuracy of position coordinates of the key points determined based on features obtained by using the feature extraction model is also improved subsequently.

### BRIEF DESCRIPTION OF THE DRAWINGS

To more clearly describe the technical solutions in embodiments of this application or the related art, the following briefly introduces the accompanying drawings required for describing the embodiments and the existing technology. Clearly, the accompanying drawings in the following description are merely some embodiments of this application, and a person of ordinary skill in the art may still derive other drawings from these accompanying drawings without creative efforts.
FIG. 1 is a schematic diagram of an application scenario of a method for training a feature extraction model according to an embodiment of this application.
FIG. 2 is a schematic flowchart of a method for training a feature extraction model according to an embodiment of this application.
FIG. 3 is a schematic diagram of palm print identification according to an embodiment of this application.
FIG. 4 is a schematic diagram of palm detection according to an embodiment of this application.
FIG. 5 is a schematic diagram of pose identification according to an embodiment of this application.
FIG. 6 is a schematic diagram of object identification according to an embodiment of this application.
FIG. 7a is a schematic diagram of a structure of an apparatus for training a feature extraction model according to an embodiment of this application.
FIG. 7b is a schematic diagram of a structure of an application apparatus for a feature extraction model according to an embodiment of this application.
FIG. 8 is a schematic diagram of a structure of a server according to an embodiment of this application.
FIG. 9 is a schematic diagram of a structure of a terminal device according to an embodiment of this application.

### DESCRIPTION OF EMBODIMENTS

Embodiments of this application are described below with reference to the accompanying drawings.

Pose estimation is a basic task of computer vision, which is widely applied to various visual tasks and a preprocessing operation of many downstream tasks (such as body movement analysis, living body identification, and action capture). In the related art, a to-be-identified image is inputted into a trained regression model, and prediction is performed by using the regression model, to obtain position coordinates of key points in the to-be-identified image, so as to determine a pose based on the position coordinates of the key point. However, accuracy of the position coordinates of the key points obtained in this manner is low.

Input data and output data of the regression model are not in the same spatial dimension, to be specific, the input data (that is, the to-be-identified image) belongs to two-dimensional data, and the output data (that is, the position coordinates of the key points) belongs to one-dimensional data. The regression model needs to constrain coordinate values in an implicit and unaligned constraint manner. Such constraint manner is used, as a result, the regression model cannot well capture internal information in the to-be-identified image, and has a limited representation capability in terms of capturing position distribution of underlying key points. In other words, the accuracy of the position coordinates of the key points outputted by the regression model is consequently low.

To resolve the foregoing problem, embodiments of this application provide a method and a related apparatus for training a feature extraction model. Input data and output data of an overall model including an initial normalizing flow model and an initial feature extraction model are in the same spatial dimension. The overall model is trained, and a feature extraction model corresponding to the initial feature extraction model in the overall model is obtained. A capability of the feature extraction model to capture the internal information in the image is improved, in other words, the representation capability to capture distributions of the position coordinates of the underlying key points is improved. Correspondingly, accuracy of position coordinates of the key points determined based on features obtained by using the feature extraction model is also improved subsequently.

The training method and an application method for the feature extraction model provided in the embodiments of this application may be applied to various scenarios, including but are not limited to, cloud technologies, artificial intelligence, intelligent traffic, driver assistance, internet of things, identification, movie and television industry, healthcare, and the like. The following application scenario is merely an example, and the training method and the application method for the feature extraction model provided in the embodiments may further be applied to another scenario, which is not limited herein. Three scenarios are used as examples for description below.

Scenario 1: Autonomous driving scenario.

A vehicle shoots an environment image around the vehicle in real time. An example in which a pedestrian in front of the vehicle is identified is used, features of human body key points in the environment image can be extracted by using the feature extraction model, and then position coordinates of the human body key points are determined based on the features of the human body key points, to obtain a pose of the pedestrian in front of the vehicle, thereby determining a driving speed and direction, and the like of the vehicle.

Scenario 2: Identity identification scenario.

With attention paid to privacy problems of people, palm print identification gradually starts to be popularized in application scenarios such as payment and identity verification. Features of palm key points in the to-be-identified image can be extracted by using the feature extraction model, and then position coordinates of the palm key points are determined based on the features of the palm key points, to circle out a position of a palm in the to-be-identified image, and transfer an image of a palm region to a subsequent palm print identification module, thereby improving accuracy of subsequent palm print identification.

Scenario 3: Action identification scenario.

Feature extraction is performed on the to-be-identified image by using a trained feature extraction model, to obtain features of key points of entities included in the to-be-identified image. Then, position coordinates of the key points of the entities are determined based on the features of the key points of the entities, to obtain poses of the entities, so that action identification, gesture identification, gait identification, and the like on entities such as human bodies or animals are implemented. Further, whether the entities fall down and the entities have a disease signal can be determined, and the method can further be configured for implementing automatic teaching of sports or dances, producing a movie special effect, or the like.

The training method and the application method for the feature extraction model provided in this application may be performed by a computer device having a feature extraction capability, such as a terminal device or a server. The terminal device may be specifically a desktop computer, a laptop computer, a smart phone, a tablet computer, an internet of things device, an aircraft, or a portable wearable device. The internet of things device may be a smart speaker, a smart television, a smart air conditioner, a smart in-vehicle device, or the like. The smart in-vehicle device may be an in-vehicle navigation terminal, an in-vehicle computer, or the like. The portable wearable device may be a smart watch, a smart wristband, a head-mounted device, or the like, but is not limited thereto. The server may be an independent physical server, a server cluster including a plurality of physical servers, a distributed system, or may be a cloud server or a server cluster that provides basic cloud computing services such as cloud services, cloud databases, cloud computing, cloud functions, cloud storage, network services, cloud communication, middleware services, domain name services, security services, content delivery networks (CDN), and big data and artificial intelligence platforms. The terminal device and the server may be connected directly or indirectly in a wired or wireless communication manner, which is not limited in this application.

For ease of understanding the method for training the feature extraction model provided in the embodiments of this application, an application scenario of the method for training the feature extraction model is exemplarily described below by using an example in which the method for training the feature extraction model is performed by the server.

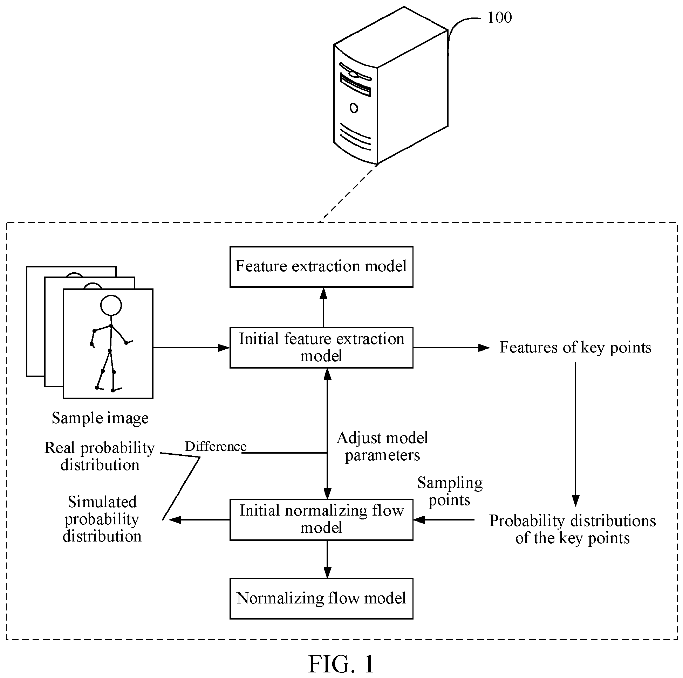

FIG. 1 is a schematic diagram of an application scenario of a method for training a feature extraction model according to an embodiment of this application. As shown in FIG. 1, the application scenario includes a server 100. The server 100 may be an independent server configured to train the feature extraction model. After the training of the feature extraction model is completed, a trained feature extraction model may be deployed on a server or terminal device corresponding to a product, to provide services such as feature extraction and pose identification. Alternatively, the server 100 may be a server providing corresponding services for various products, and the provided services may include, for example, feature extraction performed on an image including entities such as human bodies or animals. An example in which the server 100 trains the feature extraction model is used for description below.

The server 100 obtains sample images. As shown in FIG. 1, the sample images may be a plurality of images in which human poses are to be identified. The sample image includes a plurality of key points having ground truth (i.e., real) position coordinates, to obtain ground truth (i.e., real) probability distributions of the key points based on the ground truth position coordinates. Feature extraction is performed on the sample image by using an initial feature extraction model, to obtain features of the key points in the sample image. To avoid a case in which input data and output data are not in the same spatial dimension, the position coordinates of the key points are no longer directly predicted based on the features of the key points in this application, but probabilities that the key point is at various positions in the sample image are determined based on the feature of the key point, that is, probability distributions of the key points are obtained. Sampling is performed on the plurality of probability distributions, to obtain a plurality of samples, and the plurality of samples are fitted by using an initial normalizing flow model, to obtain simulated probability distributions. In other words, the position coordinates of the key points are converted into probability distributions on an image plane space, so that the input data and the output data are in the same spatial dimension.

To enable the simulated probability distributions outputted by the initial normalizing flow model to approach the ground truth probability distributions of the key points in the sample image, not only can a model parameter of the initial normalizing flow model be adjusted, to improve a data fitting capability of the initial normalizing flow model, but also a model parameter of the initial feature extraction model can be adjusted, to make the input data of the initial normalizing flow model more accurate. In other words, the model parameter of the initial normalizing flow model and the model parameter of the initial feature extraction model are adjusted based on a difference between the simulated probability distribution and the ground truth probability distribution, to obtain a feature extraction model and a normalizing flow model. Therefore, input data and output data of an overall model including the initial normalizing flow model and the initial feature extraction model are in the same spatial dimension. The overall model is trained, and the feature extraction model corresponding to the initial feature extraction model in the overall model is obtained. A capability of the feature extraction model to capture internal information in an image in a training process is improved, in other words, a representation capability to capture distributions of position coordinates of underlying key points is improved. Correspondingly, accuracy of position coordinates of the key points determined based on features obtained by using the feature extraction model is also improved subsequently.

The method for training the feature extraction model provided in this embodiment of this application may be performed by the server. However, in another embodiment of this application, the terminal device may alternatively have a function similar to that of the server, to perform the method for training the feature extraction model provided in this embodiment of this application. Alternatively, the method for training the feature extraction model provided in this embodiment of this application is jointly performed by the terminal device and the server. This is not limited in this embodiment. It should be understood that the various embodiments described in this specification are not mutually exclusive, and that features, structures, or characteristics described in connection with one embodiment may be combined, in whole or in part, with features, structures, or characteristics of one or more other embodiments described herein, unless such combination would result in a technical conflict or contradiction, or would render the resulting embodiment inoperative for its intended purpose. Accordingly, any embodiment disclosed herein may be practiced in combination with any other embodiment, or portion thereof, disclosed herein, to the extent such combination is technically feasible and consistent with the teachings of the present disclosure.

The following describes the method for training the feature extraction model provided in this application in detail below by using method embodiments.

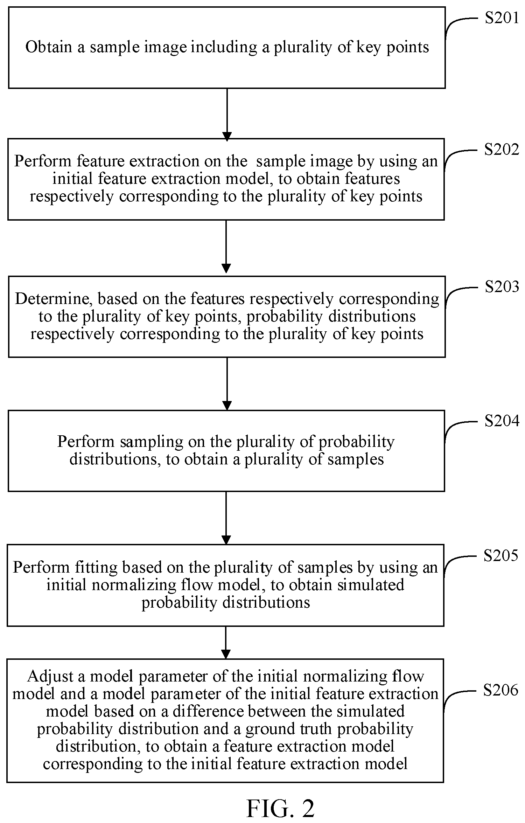

FIG. 2 is a schematic flowchart of a method for training a feature extraction model according to an embodiment of this application. For ease of description, in the following embodiments, an example in which the method for training the feature extraction model is performed by a server is still used for description. As shown in FIG. 2, the method for training the feature extraction model includes the following operations.

S201: Obtain a sample image including a plurality of key points.

The sample image is an image including the plurality of key points. The key points are specific parts configured for describing an entity pose and an action in an entity pose identification task. That is, the key points define a pose of an object/entity in the sample image. Using human pose identification as an example, the key points may be parts such as a head, a neck, shoulders, elbows, wrists, a waist, knees, and ankles. Accuracy and robustness of pose identification can be improved by accurately detecting positions of the key points, thereby facilitating better application in an actual scenario.

In addition, the key points included in the sample image each have a ground truth position coordinate. The ground truth position coordinates are coordinates that can accurately describe the positions of the key points, and can be obtained through manual calibration.

In a specific implementation of this application, if the image involves data related to user information, facial images, and the like, when the foregoing embodiment of this application is applied to specific products or technologies, separate permission or separate consent from a user needs to be obtained, and the collection, use, and processing of related data need to comply with relevant laws, regulations, and standards of related countries and regions.

S202: Perform feature extraction on the sample image by using an initial feature extraction model, to obtain features respectively corresponding to the plurality of key points.

The initial feature extraction model is a feature extraction model that has not been trained completely, and is configured for performing feature extraction on input data. For example, the feature extraction is performed on the sample image, to obtain the features respectively corresponding to the key points included in the sample image. The features corresponding to the key points are configured for indicating unique attributes or marks of the key points, such as corners, edges, and textures. These features can be configured for describing and identifying the key points, to extract important information and structures from the image.

The initial feature extraction model is not specifically limited to this embodiment of this application. For example, the initial feature extraction model may include a backbone network and a convolutional layer. The backbone network is configured for performing the feature extraction, and the convolutional layer is configured for adjusting a dimension of a feature outputted by the backbone network. For example, the sample image is inputted into the backbone network, the feature extraction is performed by using the backbone network, to obtain a feature map, and the feature map is inputted into the convolutional layer, to obtain a feature f. A size of the feature f is K×fw×fh. K is a quantity of key points included in the sample image, fw is a width of the feature f, and fh is a length of the feature f. The feature map is an output obtained after convolution operation is performed on an input image (for example, the sample image) by using a convolution kernel in the backbone network, and reflects some features, such as colors, textures, and shapes, extracted from the input image under an action of the convolution kernel.

S203: Determine, based on the features respectively corresponding to the plurality of key points, probability distributions respectively corresponding to the plurality of key points.

To avoid a case in which input data and output data are not in the same spatial dimension, position coordinates of the key points are no longer directly predicted based on the features of the key points in this application, but probability that each of the key points is at various positions in the sample image is determined based on the feature of the key point, that is, the probability distributions of the key points are obtained. Generally, there is a particular association between the feature and the probability distribution of the key point. For example, features of some key points may be related to peak values in the probability distributions.

The probability distribution is used for describing a probability that a corresponding key point is at various positions in the sample image. For example, a probability distribution corresponding to an elbow key point is configured for indicating a probability that each pixel in the sample image belongs to the elbow key point. For example, a probability that a pixel at a position (2,3) in the sample image belongs to the elbow key point is 50%, and a probability that a pixel at a position (3,4) belongs to the elbow key point is 30%. In the probability distribution corresponding to each of the key points, a sum of probabilities of all positions in the sample image is 1. The probability distribution of the key point refers to a probability or density that the key point appears in the image. Through the probability distributions, distribution conditions and densities of the key points in the image can be clarified, thereby better understanding content and a structure of the image.

A manner of converting the feature into the probability distribution is not specifically limited in this embodiment of this application, and may be set by a person skilled in the art based on an actual requirement. For example, the feature is converted into the probability distribution by using an argmax function. For another example, refer to Formula (1), the feature is converted into the probability distribution by using a softmax function. ${P}_{i} = Softmax \left({f}_{i}\right)$ (1)

*Pᵢ* is a probability distribution corresponding to an i^{th} key point. *fᵢ* is a feature of the i^{th} key point.

In comparison to the case in which the feature is converted into the probability distribution by using the argmax function, when the feature is converted into the probability distribution by using the softmax function, gradient truncation is not generated, and end-to-end training can be performed.

S204: Perform sampling on the plurality of probability distributions, to obtain a plurality of samples.

One key point corresponds to one probability distribution. Using one key point as an example, sampling is performed on a probability distribution corresponding to the key point, to obtain a sample corresponding to the key point. In this way, the sampling is respectively performed on the probability distributions corresponding to all the key points, to obtain the plurality of samples.

In a possible implementation, because the probability distribution may be a discrete distribution, and it is difficult to perform sampling on the discrete distribution, the discrete distribution may be regarded as a classification problem. To be specific, each set of position coordinates in the probability distribution is regarded as a type, and a probability value corresponding to each set of position coordinates is respectively added to a random noise, to obtain a plurality of perturbed probabilities. The random noises follows a Gumbel distribution, and the Gumbel distribution enables sampling performed on a type distribution. In addition, the perturbed probability can be differentiated, so that no gradient information is lost in a model training process. Finally, the plurality of perturbed probabilities are normalized based on an annealing parameter, to obtain a sample corresponding to the probability distribution. The foregoing processing is respectively performed on the plurality of probability distributions, to obtain the plurality of samples.

Still using the foregoing i^{th} key point as an example, the probability distribution Pᵢ corresponding to the i^{th} key point is a discrete distribution, and it is extremely difficult to perform sampling on the discrete distribution. Therefore, the discrete distribution is regarded as a classification problem, to be specific, each set of position coordinates in the probability distribution is regarded as a type, and a probability value corresponding to each set of position coordinates may be represented as π₁₁, π₁₂, ... , π_{1fh}, π₂₁, ... π_{fwfh}, where a sum of all probability values is 1. The sample may be extracted from the probability distribution Pᵢ by using Gumbel Max. For details, refer to Formula (2). $z = argmax \left({g}_{j}+log{π}_{j}\right) , 1 \leq {π}_{j} \leq fw \times fh$ (2)

z is a sample, fw is a width of a feature of the i^{th} key point, fh is a length of the feature of the i^{th} key point, πⱼ is a probability value of a j^{th} position coordinates in the probability distribution corresponding to the i^{th} key point, gⱼ is a random sampling variable in independent and identically distributed standard Gumbel distributions, and a function G (x) of the Gumbel distribution may be represented as Formula (3). $G \left(x\right) = {e}^{- {e}^{x}}$ (3)

Formula (4) can be obtained by inverting Formula (3) from a uniform distribution. ${g}_{j} = - log \left(-log\left({ϵ}_{j}\right)\right) , {ϵ}_{j} ∼ U \left(0, 1\right)$ (4)

gⱼ is a random sampling variable from the independent and identically distributed standard Gumbel distributions, and εⱼ is a random sample from the uniform distribution.

Because argmax in Formula (2) is non-differentiable, approximate Gumbel Softmax that is differentiable is used to replace the Gumbel Max. Refer to Formula (5). $z = \frac{{e}^{\frac{{g}_{j} + log \left({π}_{j}\right)}{τ}}}{{\sum }_{j}^{fw \times fh} {e}^{\frac{{g}_{j} + log \left({π}_{j}\right)}{τ}}} , for j = 1 , … , fw \times fh$ (5)

z is a sample. fw is the width of the feature of the i^{th} key point. fh is the length of the feature of the i^{th} key point. πⱼ is the probability value of the j^{th} position coordinates in the probability distribution corresponding to the i^{th} key point. gⱼ is the random sampling variable from the independent and identically distributed standard Gumbel distributions. τ is the annealing parameter, and *τ* > 0.

When *τ* approaches 0, Formula (5) is more similar to Formula (2). However, a problem that gradient disappears is worse. When *τ* is large, Formula (5) approaches the uniform distribution, and training stability is stronger. In a possible implementation, a slightly larger *τ* may be used initially in the model training process, and is then gradually annealed to a value approaching 0.

Therefore, when the probability distribution corresponding to the key point is the discrete distribution, to avoid a problem that it is difficult to perform sampling on the discrete distribution, the discrete distribution is regarded as a classification problem in this embodiment of this application. To be specific, each set of position coordinates in the feature map is regarded as a type, and the probability value corresponding to each set of position coordinates is respectively added to the random noise, to obtain the plurality of perturbed probabilities. The random noises follow the Gumbel distribution. The Gumbel distribution enables the sampling performed on the type distribution, thereby converting the discrete distribution into a problem of performing sampling in the types. In addition, the obtained perturbation probabilities can implement differentiation, and the gradient information is not lost in the model training process, thereby improving accuracy of the model. Finally, the plurality of perturbed probabilities are normalized based on the annealing parameter, to obtain the sample corresponding to the probability distribution. Therefore, accuracy of model training is ensured.

S205: Perform fitting based on the plurality of samples by using an initial normalizing flow model, to obtain simulated probability distributions.

The initial normalizing flow model is a normalizing flow model that has not been trained completely. The normalizing flow model can convert an arbitrary data distribution into a simple base distribution by constructing invertible conversion. The plurality of samples are inputted into the initial normalizing flow model for fitting, to obtain probability distributions configured for describing the position coordinates of the plurality of key points, that is, the simulated probability distributions.

Through the normalizing flow model, the input data, that is, potential distributions of the position coordinates of the key points, can be learned and understood. Such potential distributions can describe an internal structure and rule of data, so that the normalizing flow model can better understand the input data, thereby improving accuracy of the position coordinates of the key points.

Still using the foregoing as an example, the plurality of samples obtained by using Formula (5) may be used to construct a probability distribution shape of the initial normalizing flow model. The probability distribution shape is centered on the position coordinates of the key points predicted by the initial normalizing flow model. In a possible implementation, the simulated probability distribution may be obtained through re-parameterization, as shown in Formula (6). ${logP}_{feat} = Flow . logP \left(\frac{z - o}{{σ}_{o}}\right) - log \left({σ}_{o}\right)$ (6)

P_{feat} is the simulated probability distribution. *Flow*. logP is a logarithmic probability of a given data point calculated by using the initial normalizing flow model. z is the sample. o = (oₓ, o_{y}) is the position coordinates of the key point that are predicted by the initial normalizing flow model. σₒ is a variance of the sample. In a possible implementation, the variance may be set to change from large to small, thereby rapidly converging the model.

S206: Adjust a model parameter of the initial normalizing flow model and a model parameter of the initial feature extraction model based on a difference between the simulated probability distribution and a ground truth probability distribution, to obtain a feature extraction model corresponding to the initial feature extraction model.

The simulated probability distributions are probability distributions of the position coordinates of the key points learned by the initial normalizing flow model. The ground truth probability distributions are probability distributions of the ground truth position coordinates of the key points, and may be determined based on the ground truth position coordinates of the key points corresponding to the samples, for example, respectively. Therefore, a learning capability of the initial normalizing flow model can be reflected based on the difference between the simulated probability distribution and the ground truth probability distribution. Further, the model parameter of the initial normalizing flow model and the model parameter of the initial feature extraction model can be adjusted based on the difference between the simulated probability distribution and the ground truth probability distribution, for example, in a training manner of reducing the difference between the simulated probability distribution and the ground truth probability distribution. A process in which the model parameter is continuously adjusted is the model training process, so that a trained feature extraction model and/or normalizing flow model are obtained. Therefore, the simulated probability distribution obtained through fitting by using the normalizing flow model gradually approaches the ground truth probability distribution, and the features obtained through extraction by using the feature extraction model are more accurate.

In addition, in the related art, a high-resolution heat map is further generated based on the feature map obtained by using the feature extraction model. A heat map is generated for each of the key points. In the heat map, a position at which the key point most likely appears is marked with a high probability, and other positions are marked with low probabilities. Finally, the position coordinates of the key point can be obtained based on the heat map by using the argmax function. However, because a size of the heat map is limited, the position coordinates of the key point that are obtained by using the argmax function usually have a quantization error, and as a result, accuracy of the position coordinates is low.

Based on this, in this embodiment of this application, it is considered that the feature outputted by the feature extraction model (or the feature map outputted by the backbone network) have a probability distribution. Therefore, the feature outputted by the feature extraction model is converted into a probability distribution, and the probability distribution is learned by the initial normalizing flow model, to obtain the simulated probability distribution. The normalizing flow model can obtain a corresponding shape through fitting based on inputted samples, and can convert a distribution in one space into a distribution in another space, so that the initial normalizing flow model can be trained based on the difference between the simulated probability distribution and the ground truth probability distribution.

In addition, a fitting capability of the initial normalizing flow model is not only related to the parameter of the initial normalizing flow model, but also related to accuracy of the feature outputted by the initial feature extraction model. If accuracy of the features of the key points outputted by the initial feature extraction model is low, the initial normalizing flow model learns based on probability distributions corresponding to the features with low accuracy, and as a result, a learning effect of the initial normalizing flow model is affected. Therefore, in the model training process, not only the model parameter of the initial normalizing model needs to be adjusted, but also the model parameter of the initial feature extraction model needs to be simultaneously adjusted, so that the initial feature extraction model can perform the feature extraction more accurately, and the initial normalizing flow model can also fit the probability distribution more accurately. Therefore, in this manner, the heat map is not used, and the features of the key points are not compressed, thereby improving accuracy of the subsequently obtained position coordinates of the key points.

In the foregoing technical solution, the sample image is obtained, and the sample image includes the plurality of key points having the ground truth position coordinates, to obtain the ground truth probability distributions based on the ground truth position coordinates of the plurality of key points. The feature extraction is performed on the sample image by using the initial feature extraction model, to obtain the features of the key points. To avoid a case in which the input data and the output data are not in the same spatial dimension, the position coordinates of the key points are no longer directly predicted based on the features of the key points in this application, but the probabilities that the key points are at various positions in the sample image are determined based on the features of the key points, that is, the probability distributions of the key points are obtained. Sampling is performed on the plurality of probability distributions, to obtain the plurality of samples, and the plurality of samples are fitted by using the initial normalizing flow model, to obtain the simulated probability distributions. In other words, the position coordinates of the key points are converted into probability distributions on an image plane space, so that the input data and the output data are in the same spatial dimension.

To enable the simulated probability distribution outputted by the initial normalizing flow model to approach the ground truth probability distribution, not only can the model parameter of the initial normalizing flow model be adjusted, to improve a data fitting capability of the initial normalizing flow model, but also the model parameter of the initial feature extraction model can be adjusted, to make the input data of the initial normalizing flow model more real. In other words, the model parameter of the initial normalizing flow model and the model parameter of the initial feature extraction model are adjusted based on the difference between the simulated probability distribution and the ground truth probability distribution, to correspondingly obtain the normalizing flow model and the feature extraction model. Therefore, input data and output data of an overall model including the initial normalizing flow model and the initial feature extraction model are in the same spatial dimension. The overall model is obtained through training, and the feature extraction model corresponding to the initial feature extraction model in the overall model is obtained. A capability of the feature extraction model to capture internal information in an image in the training process is improved, in other words, a representation capability to capture distributions of position coordinates of underlying key points is improved. Correspondingly, accuracy of position coordinates of the key points determined based on features obtained by using the feature extraction model is also improved subsequently.

A loss function used in the model training process is not specifically limited in this embodiment of this application. Three types of loss functions are respectively described below by using examples.

### Manner 1:

Refer to Formula (7) $L = {L}_{flow}$ (7)

L is an overall loss function. L_{flow} is a first difference, the first difference being configured for describing the difference between the simulated probability distribution and the ground truth probability distribution. The first difference may be represented as Formula (8). ${L}_{flow} = - {logP}_{feat}$ (8)

P_{feat} is the simulated probability distribution, which may refer to the foregoing Formula (6).

In a possible implementation, training of the model may be implemented by using maximum likelihood estimation and Formula (8). The maximum likelihood estimation is a commonly used parameter estimation method that estimates a parameter by maximizing a likelihood function of data. In the normalizing flow model, the maximum likelihood estimation may be used to estimate a parameter of a conversion function, so that the simulated probability distribution generated by the normalizing flow model is as similar as possible to the ground truth probability distribution.

### Manner 2:

The maximum likelihood estimation alone described in the manner 1 is used as the overall loss function. Although training of the normalizing flow model may also be implemented, the maximum likelihood estimation alone may not be enough to completely fit a complex distribution of the data. In this case, more flexibility and freedom degrees can be provided with reference to the standard probability distribution, so that the normalizing flow model better fits the data. For details, refer to A1 to A4.

A1: Determine, based on the ground truth position coordinates of the plurality of key points, the standard probability distributions respectively corresponding to the plurality of key points.

The standard probability distributions are not specifically limited in this embodiment of this application, and may be set by a person skilled in the art based on an actual requirement. A Gaussian distribution is as an example, a parameter such as an average value and a variance of the Gaussian distribution may be used as prior information, to be specific, the variance and the average value can be determined based on the ground truth position coordinates of the key points, to obtain standard probability distributions that conforms to the Gaussian distribution, thereby guiding the normalizing flow model to fit a specific data distribution. With reference to the Gaussian distribution, the normalizing flow model may use advantages, such as simplicity, flexibility, and continuity of the Gaussian distribution in probability distribution modeling. Meanwhile, an invertible conversion feature of Gaussian distribution also enables the normalizing flow model to implement more complex data transformation and generation tasks.

A2: Perform sampling on the standard probability distributions, to obtain a plurality of target sampling points.

Continue with the Gaussian distribution as the standard probability distribution, and one key point in the plurality of key points as an example, the target sampling point satisfies the standard probability distribution. The standard probability distribution may be represented as Formula (9). ${logP}_{gt} = log \left(\frac{π}{2}\right) - 2 log \left({σ}_{g}\right) - \frac{1}{2} \left({\left(\frac{t - μ}{{σ}_{g}}\right)}^{2}\right)$ (9)

P_{gt} is the standard probability distribution. *t* = (*tₓ*, *t_{y}*) is the target sampling point obtained through sampling. µ = (µₓ, µ_{y}) is the ground truth position coordinate. σ_{g} is a variance obtained based on the ground truth position coordinate.

Therefore, the target sampling point of each of the key points is obtained based on the foregoing manner, and the plurality of sampling points are obtained.

A3: Perform fitting based on the plurality of target sampling points by using the initial normalizing flow model, to obtain predicted probability distributions for the plurality of key points.

Continue with one key point as an example, the target sampling point obtained through the sampling based on the standard probability distribution corresponding to the key point is inputted into the initial normalizing flow model, to guide, based on the standard probability distribution, a probability distribution shape outputted by the initial normalizing flow model.

The fitting is performed based on the plurality of target sampling points by using the initial normalizing flow model, to obtain predicted probability distributions for the key points. The predicted probability distribution may be represented as Formula (10). ${logP}_{pred} = Flow . logP \left(\frac{t - μ}{{σ}_{g}}\right) - log \left({σ}_{g}\right)$ (10)

P_{pred} is the prediction probability distribution. *Flow*. logP is a logarithmic probability of calculating the target sampling point by using the initial normalizing flow model. t is a target sampling point obtained through sampling. µ is the ground truth position coordinate. σ_{g} is a variance obtained based on the target sampling point.

A4: Adjust the model parameter of the initial normalizing flow model and the model parameter of the initial feature extraction model based on the first difference and a second difference.

The first difference is the difference between the simulated probability distribution and the ground truth probability distribution, and the second difference is a difference between the predicted probability distribution and the standard probability distribution.

The loss function based on the first difference and the second difference may be represented as Formula (11). $L = {L}_{flow} + {L}_{pred}$ (11)

L is an overall loss function. *L_{flow}* is the first difference. *L_{pred}* is the second difference. The second difference may be represented as Formula (12). ${L}_{pred} = {logP}_{gt} - {logP}_{pred}$ (12)

*L_{pred}* is the second difference. *P_{gt}* is the standard probability distribution. For details, refer to Formula (9) and *P_{pred}* is the predicted probability distribution. For details, refer to Formula (10). This is equivalent to applying a KL divergence constraint to bring the predicted probability distribution to approach the standard probability distribution.

Therefore, although a probability distribution of the ground truth position coordinates is usually unknown, the KL divergence may not be directly calculated. In this case, it may be assumed that a distribution of ground truth position coordinates is the standard probability distribution such as the Gaussian distribution, and the sampling is performed on the standard probability distribution to approximate calculate the KL divergence. Because the standard probability distribution has a simple mathematical form and calculation convenience, the standard probability distribution may be used as a proper approximation to evaluate a difference between model predicted data and a ground truth data distribution, to guide the initial normalizing flow model to learn quickly and accurately. In other words when the model parameter of the initial normalizing flow model is optimized, not only the difference between the simulated probability distribution and the ground truth probability distribution needs to be minimized, but also the predicted probability distribution generated by the initial normalizing flow model needs to approach the standard probability distribution as much as possible. Not only is training efficiency of a model improved, but also the fitting capability and flexibility of the normalizing flow model are improved, so that the normalizing flow model better adapts to cases of different data distributions.

### Manner 3:

In a process of performing model training using the manner 2, because the model has no clue with respect to coordinates and variance of the model at an initial training stage, the model easily falls into a dead end. Therefore, a constraint of an optimal probability distribution is added based on the manner 2. Refer to B1 and B2.

B1: Obtain, based on the features respectively corresponding to the plurality of key points, optimal probability distributions respectively corresponding to the plurality of key points;

The optimal probability distribution is not specifically limited in this embodiment of this application, and may be set by a person skilled in the art based on an actual requirement. An example in which a sample image is an image including a face of a subject is used below. Optimal probability distribution may follow the Gaussian distribution or a Laplace distribution, and may be represented as Formula (13). Therefore, for the sample image including the face of the subject, although a key distance of the face of the subject is close and identification is complex, in comparison with other distribution, the Gaussian distribution or the Laplace distribution is more stable and convenient, and stability is higher while accuracy is ensured. ${logP}_{optimal} = \left\{\begin{matrix}log \left(\frac{π}{2}\right) - 2 log \left({σ}_{g}\right) - \frac{1}{2} \left({\left(\frac{t - μ}{{σ}_{g}}\right)}^{2}\right) , & gaussian \\ - 2 log \left({σ}_{g}\right) - \left|\frac{t - μ}{{σ}_{g}}\right| , & laplace\end{matrix}\right.$ (13)

*Pₒₚₜᵢₘₐₗ* is the optimal probability distribution. gaussian is the Gaussian distribution. laplace is the Laplace distribution. σ_{g} is a variance obtained based on the feature of the key point. t is a sample obtained based on the feature of the key point. µ is an average value obtained based on the feature of the key point.

B2: Adjust the model parameter of the initial normalizing flow model and the model parameter of the initial feature extraction model based on the first difference, the second difference, and a third difference.

The first difference is the difference between the simulated probability distribution and the ground truth probability distribution, the second difference is the difference between the predicted probability distribution and the standard probability distribution, and the third difference is a difference between the standard probability distribution and the optimal probability distribution.

A loss function based on the first difference, the second difference, and the third difference may be represented as Formula (14). $L = {L}_{flow} + {L}_{pred} + {L}_{optimal}$ (14)

L is the overall loss function. L_{flow} is the first difference. L_{pred} is the second difference. Lₒₚₜᵢₘₐₗ is the third difference. The third difference may be represented as Formula (15). ${L}_{optimal} = {logP}_{gt} - {logP}_{optimal}$ (15)

*Lₒₚₜᵢₘₐₗ* is the third difference. *P_{gt}* is the standard probability distribution. For details, refer to Formula (9), and Pₒₚₜᵢₘₐₗ is the optimal probability distribution. For details, refer to Formula (13).

Therefore, the model training is implemented based on the overall loss function including the first difference, the second difference, and the third difference, when the model parameter of the initial normalizing flow model is optimized by not only minimizing the difference between the simulated probability distribution and the ground truth probability distribution, but also making the predicted probability distribution generated by the initial normalizing flow model to approach the standard probability distribution as much as possible. In addition, through the constraint of the optimal probability distribution, when the initial normalizing flow model fits the data, a deviation from the optimal distribution further needs to be considered. In this way, a poor local optimal solution in the model at the initial training stage can be avoided, and stability and generalization capability of the model are improved.

In a possible implementation, the overall loss function may be represented not only based on Formula (14) but also based on Formula (16). To be specific, the overall loss function is determined based on the first difference, the second difference, the third difference, a first weight, and a second weight, to adjust the model parameter of the initial normalizing flow model and the model parameter of the initial feature extraction model based on a training direction of minimizing the overall loss function, so as to obtain the feature extraction model and/or the normalizing flow model. $L = {L}_{flow} + {αL}_{pred} + {βL}_{optimal}$ (16)

L is the overall loss function. L_{flow} is the first difference. L_{pred} is the second difference. Lₒₚₜᵢₘₐₗ is the third difference. α is the first weight, configured for adjusting the second difference, to reduce a difference between the second difference and the first difference. β is the second weight, for adjusting the third difference, to reduce a difference between the third difference and the first difference.

Therefore, a difference between the first difference, the second difference, and the third difference may be made to be small by using the first weight and the second weight, thereby improving stability in the model training process.

In a possible implementation, the second weight is increased to obtain an updated second weight if a quantity of iterations is less than a preset iteration quantity threshold and a difference between overall loss function values obtained in two consecutive model trainings is greater than a preset difference threshold.

A size of the preset iteration quantity threshold is not specifically limited in this embodiment of this application, and may be set by a person skilled in the art according to an actual requirement. It indicates that a fluctuation of the model is large at the initial training stage of the model, that is, the model training is unstable, therefore, a size of the second weight is increased and stability of the model training is improved if the quantity of iterations is less than the preset iteration quantity threshold and the difference between the overall loss function values obtained in two consecutive model trainings is greater than the preset difference threshold.

The position coordinates of the key point may alternatively be obtained based on the heat map. In the related art, although the softmax function may be used to replace the argmax function, in other words, the heat map is converted into a probability distribution by using the softmax function to avoid gradient truncation caused by generation, as a result, a problem that end-to-end training cannot be performed. However, in the manner that the feature is converted into the heat map, and then the probability distribution is obtained based on the heat map, because the softmax function changes a probability distribution shape, so that a difference exists between the heat map learned by the model and a final probability distribution, as a result, a decrease in accuracy of the position coordinates of the key point is caused. In addition, in a process of determining the position coordinates of the key point, the heat map is used. A large calculation amount of the heat map causes long determining time, and is not applicable to a scenario that requires a high time requirement such as real-time pose identification.

Based on this, the position coordinates of the key point are no longer determined by using the heat map in this embodiment of this application, but the feature of the key point included in the sample image is extracted based on the initial feature extraction model, then the feature of the key point is converted into the probability distribution, and the fitting is performed by using the initial normalizing flow model. Because the normalizing flow model can fit any probability distribution, the normalizing flow model may be configured for modeling the probability distribution of the key point. Therefore, when the fitting capability of the initial normalizing flow model is trained, a feature extraction capability of the initial feature extraction model is adjusted to obtain the feature extraction model.

After a to-be-identified image is obtained, the feature extraction is performed on the to-be-identified image by using the feature extraction model, to obtain features respectively corresponding to a plurality of to-be-identified key points included in the to-be-identified image. Probability distributions respectively corresponding to the plurality of to-be-identified key points are determined based on the features respectively corresponding to the plurality of to-be-identified key points. Position coordinates of the plurality of to-be-identified key points in the to-be-identified image are determined based on the probability distributions respectively corresponding to the plurality of to-be-identified key points.

Therefore, the initial normalizing flow model is followed by the feature extraction model. When identification is performed on the position coordinates of the key points in the to-be-identified image, the normalizing flow model does not need to be used, thereby reducing overall time consumption. In addition, in this manner, a heat map is not used, and the model itself is more lightweight, to avoid an additional time consumption burden. In other words, this manner consumes very low time costs, and may be applicable to the scenario that requires the high time requirement, such as the real-time pose identification.

For ease of further understanding the technical solution provided in this embodiment of this application, the following provides an overall exemplary introduction to the method for training the feature extraction model by using an example in which the method for training the feature extraction model is performed by the server provided in this embodiment of this application.

The model training process is described below first.

S1: Obtain the sample image including the plurality of key points.

The plurality of key points included in each sample image respectively has the ground truth position coordinates. Using a human pose identification scenario as an example, ground truth position coordinates of the key points such as the elbow in the sample image may be annotated, in other words, positions of the key points such as the elbow in the sample image.

S2: Perform the feature extraction on the sample image by using the initial feature extraction model, to obtain the features respectively corresponding to the plurality of key points.

S3: Determine, based on the features respectively corresponding to the plurality of key points, the probability distributions respectively corresponding to the plurality of key points.

The features of the key points can be converted into the probability distributions using the foregoing Formula (1).

S4: Perform sampling on the plurality of probability distributions, to obtain the plurality of samples.

The sampling may be performed respectively on the probability distributions corresponding to each pf the key points by using the foregoing Formula (5), to obtain the plurality of samples.

S5: Perform the fitting based on the plurality of samples by using the initial normalizing flow model, to obtain the simulated probability distributions.

The probability distribution shape of the initial normalizing flow model centered on the coordinates of the predicted key points may be constructed based on the plurality of samples using the foregoing Formula (6).

S6: Determine the standard probability distributions for the key points based on the ground truth position coordinates of the key points.

The Gaussian distribution is as the example, the parameter such as the average value and the variance of the Gaussian distribution may be used as the prior information, to be specific, the variance and the average value can be determined based on the ground truth position coordinates of the key points, to obtain the standard probability distributions that conforms to the Gaussian distribution, thereby guiding the normalizing flow model to fit the specific data distribution.

S7: Perform sampling on the plurality of standard probability distributions, to obtain the plurality of target sampling points.

Standard probability distributions corresponding to the target sampling points may be represented as the foregoing Formula (9).

S8: Perform the fitting based on the plurality of target sampling points by using the initial normalizing flow model, to obtain the predicted probability distributions for the plurality of key points.

The predicted probability distribution may be represented as the foregoing Formula (10).

S9: Obtain, based on the features respectively corresponding to the plurality of key points, the optimal probability distributions respectively corresponding to the plurality of key points.

The optimal probability distribution may satisfy the Gaussian distribution or the Laplace distribution, as shown in the foregoing Formula (13).

S10: Determine the overall loss function based on the first difference, the second difference, the third difference, the first weight, and the second weight.

The overall loss function is shown in the foregoing Formula (16).

S11: Adjust the model parameter of the initial normalizing flow model and the model parameter of the initial feature extraction model in the training direction of minimizing the overall loss function, to obtain the feature extraction model and the normalizing flow model.

After the feature extraction model is obtained through the training, the position coordinates of the key points can be identified.

S12: Obtain the to-be-identified image.

S13: Perform the feature extraction on the to-be-identified image by using the feature extraction model, to obtain the features respectively corresponding to the plurality of to-be-identified key points included in the to-be-identified image.

S14: Determine, based on the features respectively corresponding to the plurality of to-be-identified key points, the probability distributions respectively corresponding to the plurality of to-be-identified key points.

S15: Determine the position coordinates of the plurality of to-be-identified key points in the to-be-identified image based on the probability distributions respectively corresponding to the plurality of to-be-identified key points.

Comparison cases of the solution of this embodiment of this application with the other three solutions are shown in Table 1.

**Table 1**

| Solution | Backbone network | Whether deconvolution is used | mAP(%) |
|---|---|---|---|
| Solution 1 | ResNet-50 | No | 62.6 |
| Solution 2 | ResNet-50 | Yes | 64.5 |
| Solution 3 | ResNet-50 | No | 68.3 |
| Solution 4 | ResNet-50 | No | 69.7 |

Solution 1 is the foregoing solution that the position coordinates of the key points are obtained based on the heat maps, but deconvolution is not used. Solution 2 is the foregoing solution that the position coordinates of the key points are obtained based on the heat maps, but the deconvolution is not used. Solution 3 is the foregoing solution that the position coordinates of the key points are obtained by using a regression model. Solution 4 is an embodiment of S1 to S15 of this application. The mean average precision (mAP) is a very important metric in the field of object detection in machine learning, and is configured for measuring performance of object detection algorithms. Generally, the mean average precision is obtained by performing a comprehensive weighted average on average precision (AP) of all types.

Application of the feature extraction model is described below with reference to two application scenarios.

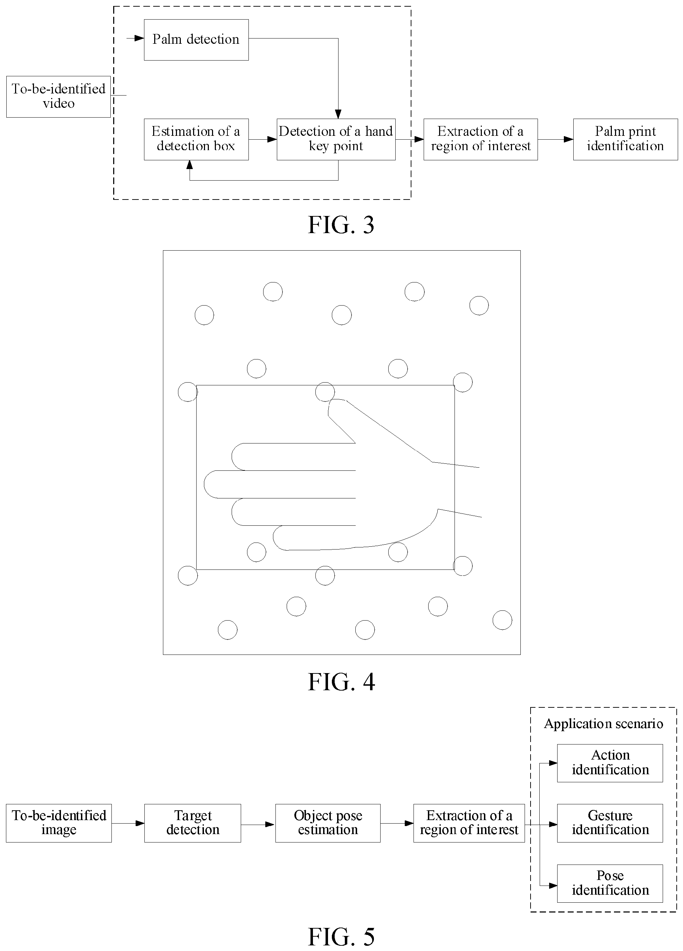

FIG. 3 is a schematic diagram of palm print identification according to an embodiment of this application.

After a to-be-identified video is obtained, palm detection is performed on each frame of an image of the to-be-identified video. As shown in FIG. 4, a position of the palm in the image is circled out by using a detection box, to crop the to-be-identified image based on the detection box, so as to obtain an image only including the palm. For a plurality of frames of images, two operations, hand key point detection and detection box position estimation, are continuously performed cyclically based on the palm images. Position coordinates of hand key points in the second to fifth frames of images are identified in a region based on a detection box obtained from a first frame of an image. Then, position coordinates of hand key points in the eleventh to tenth frames of images are identified based on a position of a detection box obtained from a sixth frame of an image, and so on. The position coordinates of the hand key points can be obtained by using the foregoing S11 to S15. After the position coordinates of the hand key points are obtained, a region of interest (ROI) is extracted, thereby realizing the palm print identification.

FIG. 5 is a schematic diagram of pose identification according to an embodiment of this application.

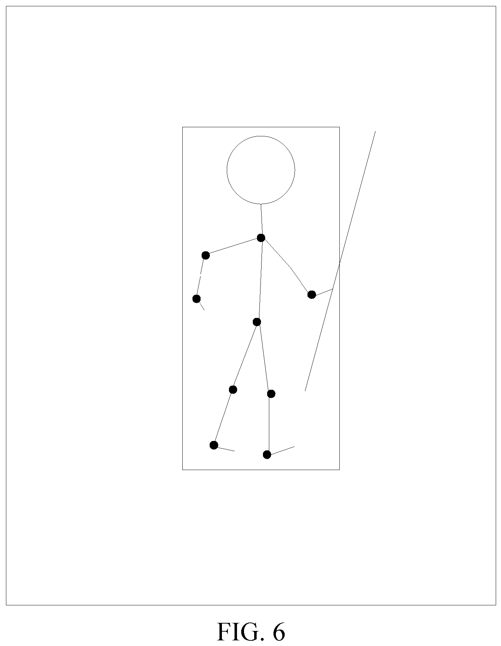

After a to-be-identified image is obtained, a to-be-identified object in the to-be-identified image is recognized, that is, target detection is implemented. As shown in FIG. 6, a position of the to-be-identified object in the image is circled out by using a detection box, to crop the to-be-identified image based on the detection box, so as to obtain an image only including the to-be-identified object. Position coordinates of key points of the to-be-identified object can be obtained by using the foregoing S11 to S15, to implement object pose estimation. Finally, a region of interest (ROI) is extracted, thereby realizing action identification, gesture identification, gait identification, and the like.

With regard to the training method and the application method for the feature extraction model described above, this application further provides a corresponding training apparatus and application apparatus for the feature extraction model, so that the training method and the application method for the feature extraction model can be applied and implemented in practice.

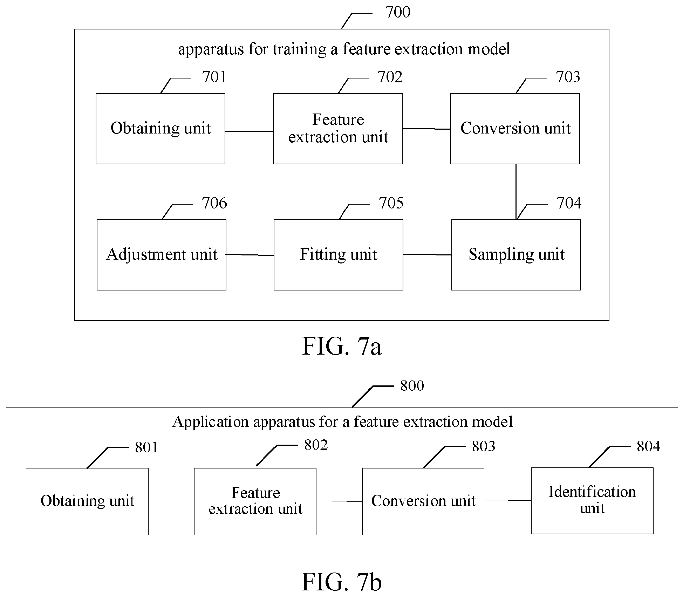

FIG. 7a is a schematic diagram of a structure of an apparatus for training a feature extraction model according to an embodiment of this application. As shown in FIG. 7a, an apparatus 700 for training the feature extraction model includes: an obtaining unit 701, a feature extraction unit 702, a conversion unit 703, a sampling unit 704, a fitting unit 705, and an adjustment unit 706.

The obtaining unit 701 is configured to obtain a sample image including a plurality of key points, the key points having ground truth position coordinates.

The feature extraction unit 702 is configured to perform feature extraction on the sample image by using an initial feature extraction model, to obtain features respectively corresponding to a plurality of key points.

The conversion unit 703 is configured to determine, based on the features respectively corresponding to the plurality of key points, probability distributions respectively corresponding to the plurality of key points, the probability distribution describing probabilities that a respective key point is at various positions in the sample image.

The sampling unit 704 is configured to perform sampling on the plurality of probability distributions, to obtain a plurality of samples.

The fitting unit 705 is configured to perform fitting based on the plurality of samples by using an initial normalizing flow model, to obtain simulated probability distributions.

The adjustment unit 706 is configured to adjust a model parameter of the initial normalizing flow model and a model parameter of the initial feature extraction model based on a difference between the simulated probability distribution and a ground truth probability distribution, to obtain a feature extraction model corresponding to the initial feature extraction model, the ground truth probability distribution being determined based on the ground truth position coordinate of the key point corresponding to a respective one of the plurality of samples.

In the foregoing technical solution, the sample image is obtained, and the sample image includes the plurality of key points having the ground truth position coordinates, to obtain the ground truth probability distributions of the key points based on the ground truth position coordinates. The feature extraction is performed on the sample image by using the initial feature extraction model, to obtain the features of the key points. To avoid a case in which input data and output data are not located in the same spatial dimension, the position coordinates of the key points are no longer directly predicted based on the features of the key points, but the probabilities that the key points are at various positions in the sample image are determined based on the features of the key points, that is, probability distributions of the key points are obtained. The plurality of samples are obtained by performing sampling on the plurality of probability distributions, and the plurality of samples are fitted by using the initial normalizing flow model, to obtain the simulated probability distributions, which is equivalent to converting the position coordinates of the key points into probability distributions on an image plane space, thereby prompting the input data and the output data to be in the same spatial dimension.

To enable the initial normalizing flow model to gradually approach potential distributions of the key points, not only the model parameter of the initial normalizing flow model can be adjusted, to improve a data fitting capability of the initial normalizing flow model, but also can the model parameter of the initial feature extraction model be adjusted, to make the input data of the initial normalizing flow model more real. In other words, the model parameter of the initial normalizing flow model and the model parameter of the initial feature extraction model are adjusted based on a difference between the simulated probability distribution and the ground truth probability distribution, to obtain a feature extraction model and a normalizing flow model. Therefore, input data and output data of an overall model including the initial normalizing flow model and the initial feature extraction model are in the same spatial dimension. The feature extraction model is obtained through training, and a capability of the feature extraction model to capture internal information in an image is improved, in other words, a representation capability to capture distributions of position coordinates of underlying key points is improved. Therefore, accuracy of position coordinates of key points determined based on features obtained by using the feature extraction model is also improved subsequently.

In a possible implementation, the conversion unit 703 is further configured to determine, based on the ground truth position coordinates of the plurality of key points, standard probability distributions respectively corresponding to the plurality of key points.

The sampling unit 704 is further configured to perform sampling on the standard probability distributions, to obtain a plurality of target sampling points.

The fitting unit 705 is further configured to perform the fitting based on the plurality of target sampling points by using the initial normalizing flow model, to obtain predicted probability distributions for the plurality of key points.

The adjustment unit 706 is specifically configured to adjust the model parameter of the initial normalizing flow model and the model parameter of the initial feature extraction model based on a first difference and a second difference, the first difference being the difference between the simulated probability distribution and the ground truth probability distribution, and the second difference being a difference between the predicted probability distribution and the standard probability distribution.

In a possible implementation, the conversion unit 703 is further configured to obtain, based on the features respectively corresponding to the plurality of key points, optimal probability distributions respectively corresponding to the plurality of key points.

The adjustment unit 706 is specifically configured to adjust the model parameter of the initial normalizing flow model and the model parameter of the initial feature extraction model based on the first difference, the second difference, and a third difference, the third difference being a difference between the standard probability distribution and the optimal probability distribution.

In a possible implementation, the optimal probability distribution satisfies a Gaussian distribution or a Laplace distribution in response to that the sample image is an image including a face of a subject.

In a possible implementation, the adjustment unit 706 is specifically configured to:
determine an overall loss function based on the first difference, the second difference, the third difference, a first weight, and a second weight, the first weight being used for reducing a difference between the second difference and the first difference, and the second weight being used for reducing a difference between the third difference and the first difference; and
adjust the model parameter of the initial normalizing flow model and the model parameter of the initial feature extraction model in a training direction of minimizing the overall loss function.

In a possible implementation, the apparatus 700 further includes a parameter adjustment unit. The unit is configured to increase the second weight to obtain an updated second weight in response to that a quantity of iterations is less than a preset iteration quantity threshold and a difference between overall loss function values obtained in two consecutive model trainings is greater than a preset difference threshold.

In a possible implementation, the sampling unit 704 is specifically configured to:
obtain, for each of the plurality of probability distributions, a plurality of differentiable perturbed probabilities based on a plurality of probability values included in the probability distribution and random noises, the random noises following a Gumbel distribution; and normalizing the plurality of perturbed probabilities based on an annealing parameter to obtain a sample corresponding to the probability distribution, the annealing parameter being used for reducing a learning rate in a training process.

FIG. 7b is a schematic diagram of a structure of an application apparatus for a feature extraction model according to an embodiment of this application. As shown in FIG. 7b, an application apparatus 800 for the feature extraction model includes: an obtaining unit 801, a feature extraction unit 802, a conversion unit 803, and an identification unit 804.

The obtaining unit 801 is configured to obtain a to-be-identified image.

The feature extraction unit 802 is configured to perform feature extraction on the to-be-identified image by using the feature extraction model, to obtain features respectively corresponding to a plurality of to-be-identified key points included in the to-be-identified image, the feature extraction model being obtained through training by using the foregoing method for training the feature extraction model.

The conversion unit 803 is configured to determine, based on the features respectively corresponding to the plurality of to-be-identified key points, probability distributions respectively corresponding to the plurality of to-be-identified key points.

The identification unit 804 is configured to determine, based on the probability distributions respectively corresponding to the plurality of to-be-identified key points, position coordinates of the plurality of to-be-identified key points in the to-be-identified image.

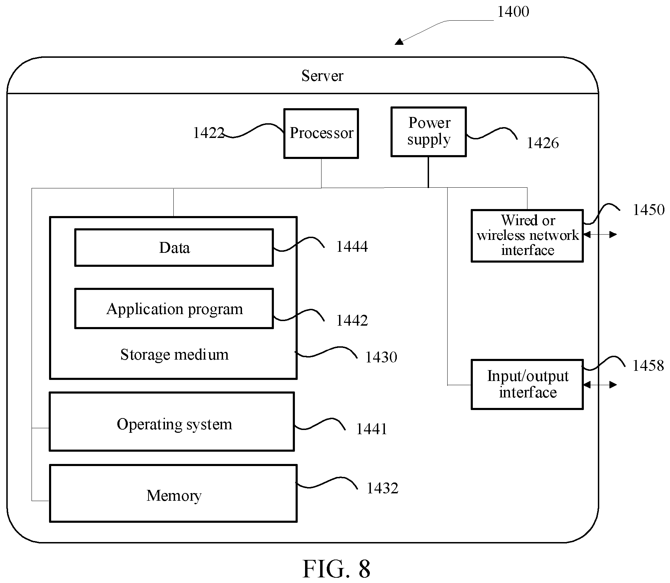

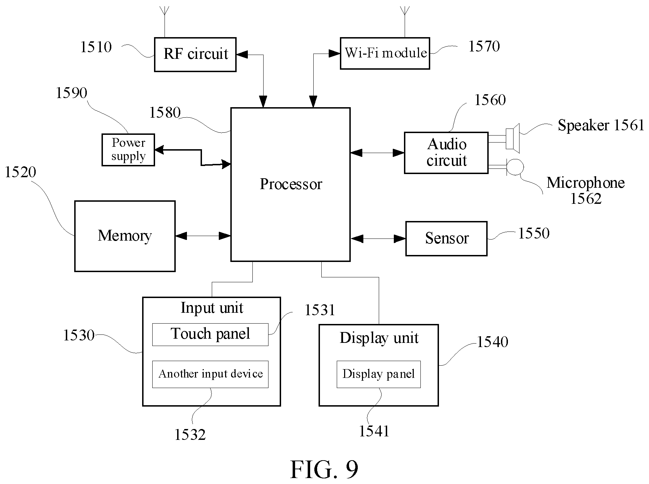

An embodiment of this application further provides a computer device. The computer device may be a server or a terminal device. The computer device provided in this embodiment of this application is introduced below from a perspective of hardware implementation. FIG. 8 is a schematic diagram of a structure of a server, and FIG. 9 is a schematic diagram of a structure of a terminal device.

FIG. 8 is a schematic diagram of a structure of a server according to an embodiment of this application. The server 1400 may have significant differences due to different configurations or performance, and may include one or more processors 1422, such as a central processing unit (CPU), a memory 1432, and a storage medium 1430 (for example, one or more mass storage devices) having one or more applications 1442 or data 1444 stored therein. The memory 1432 and the storage medium 1430 may be transient storage or persistent storage. The programs stored in the storage medium 1430 may include one or more modules (not shown in the figure), and each module may include a series of instruction operations for the server. Further, the processor 1422 may be configured to communicate with the storage medium 1430, and execute the series of instruction operations in the storage medium 1430 on the server 1400.

The server 1400 may further include one or more power supplies 1426, one or more wired or wireless network interfaces 1450, one or more input/output interfaces 1458, and/or one or more operating systems 1441, such as Windows Server^{TM}, Mac OS X^{TM}, Unix^{TM}, Linux^{TM}, FreeBSD^{TM}, and the like.

Operations performed by the server in the foregoing embodiment may be based on the structure of the server shown in FIG. 8.

The CPU 1422 is configured to perform the training method and application method for the feature extraction model described above.

In some embodiments, the CPU 1422 is configured to perform method operations of any specific implementation of the training method or application method for the feature extraction model in the embodiments of this application.

FIG. 9 is a schematic diagram of a structure of a terminal device according to an embodiment of this application. An example in which the terminal device is a smart phone is used for description. FIG. 9 is a block diagram of a partial structure of the smart phone. The smart phone includes: a radio frequency (RF for short) circuit 1510, a memory 1520, an input unit 1530, a display unit 1540, a sensor 1550, an audio circuit 1560, a wireless fidelity (Wi-Fi for short) module 1570, a processor 1580, a power supply 1590, and another component. A person skilled in the art may understand that the structure of the smart phone shown in FIG. 9 does not constitute a limitation to the smart phone. The smart phone may include more or fewer components than those shown in the figure, or combine certain components, or have different component arrangements.

The following specifically describes the components of the smart phone with reference to FIG. 9:
The RF circuit 1510 is configured to receive and transmit signals in an information receiving and transmitting process or a call process. In particular, after receiving downlink information from a base station, the RF circuit 1510 provides the downlink information to the processor 1580 for processing. In addition, the RF circuit 1510 transmits data designed for uplink to the base station.

The memory 1520 may be configured to store software programs and modules. The processor 1580 implements various function applications and data processing of the smart phone by running the software programs and modules stored in the memory 1520.

The input unit 1530 is configured to receive input digit or character information, and generate key signal inputs related to user settings and function control of the smart phone. Specifically, the input unit 1530 may include a touch panel 1531 and another input device 1532. The touch panel 1531 may also be referred to as a touch screen and may collect a touch operation performed by a user on or near the touch screen, and drive a corresponding connection apparatus based on a preset program. In addition to the touch panel 1531, the input unit 1530 may further include another input device 1532. Specifically, the another input device 1532 may include, but is not limited to, one or more of a physical keyboard, a function key (such as a volume control key, or a switch keys), a trackball, a mouse, and a joystick.

The display unit 1540 is configured to display information inputted by the user or information provided for the user, and various menus of the smart phone. The display unit 1540 may include a display panel 1541. In some embodiments, the display panel 1541 may be configured by using a liquid crystal display (LCD for short), an organic light-emitting diode (OLED for short), or the like.

The smart phone may further include at least one sensor 1550 such as an optical sensor, a motion sensor, and another sensor. As for another sensor such as a gyroscope, a barometer, a hygrometer, a thermometer, and an infrared sensor that may further be configured in the smart phone. Details are not described herein.

The audio circuit 1560, a speaker 1561, and a microphone 1562 may provide an audio interface between the user and the smart phone. The audio circuit 1560 may transmit an electrical signal obtained by converting received audio data to the speaker 1561, and the speaker 1561 converts the electrical signal into a sound signal for output. On the other hand, the microphone 1562 converts a collected sound signal into an electrical signal, which are received by the audio circuit 1560 and converted into audio data. Then, the audio data is outputted to the processor 1580 for processing and transmitted to, for example, another smart phone, or outputted to the memory 1520 for further processing through the RF circuit 1510.

The processor 1580 is a control center of the smart phone, connects various parts of the entire smart phone through various interfaces and lines, and executes various functions and processes data of the smart phone by running or executing the software programs and/or the modules stored in the memory 1520 to call data stored in the memory 1520. In some embodiments, the processor 1580 may include one or more processing units.

The electronic device further includes the power supply 1590 (such as a battery) for supplying power to the components. In some exemplary embodiments, the power supply may be logically connected to the processor 1580 by using a power management system, thereby implementing functions such as charging, discharging, and power consumption management by using the power management system.

Although not shown in the figure, the smart phone may further include a camera, a Bluetooth module, and the like. Details are not described herein.

In this embodiment of this application, the memory 1520 included in the smart phone may store a computer program and transmit the computer program to the processor.

The processor 1580 included in the smart phone may perform the training method or the application method for the feature extraction model provided in the foregoing embodiments based on instructions in the computer program.

An embodiment of this application further provides a computer-readable storage medium, configured to store a computer program, the computer program being configured for performing the training method or the application method for the feature extraction model provided in the foregoing embodiments.

An embodiment of this application further provides a computer program product or a computer program, the computer program product or the computer program including computer instructions, and the computer instructions being stored in a computer-readable storage medium. A processor of a computer device reads the computer instructions from the computer-readable storage medium, and executes the computer instructions, so that the computer device performs the training method or the application method for the feature extraction model provided in various exemplary implementations of the foregoing aspects.

A person of ordinary skill in the art may understand that, all or some of the operations of the foregoing method embodiments may be implemented by hardware related to the program instructions. The foregoing program may be stored in the computer readable storage medium. When the program is executed, operations of the foregoing method embodiments are performed. The foregoing storage medium may be at least one of the following media: a read-only memory (ROM for short), a random access memory (RAM), a magnetic disk, an optical disc, or various other media that can store the computer program.

In this embodiment of this application, the term "module" or "unit" refers to a computer program or a part of a computer program having a predetermined function, and works together with other related parts to achieve a predetermined objective, and may be all or partially implemented by using software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

The various embodiments in this specification are described in a progressive manner. Same or similar parts in the various embodiments can be cross-referenced, and descriptions of each embodiment focus on differences from other embodiments. In particular, as for the device and system embodiments, since the device and system embodiments are basically similar to the method embodiments, the description is relatively simple, and for related parts, reference may be made to the description of the method embodiments. The device and system embodiments described above are merely exemplary. Units described as separate components may or may not be physically separated, and components displayed as units may or may not be physical units, in other words, the components may be located in one place, or may be distributed on a plurality of network units. Some or all of the modules may be selected to implement the objective of the solution of this embodiment based on an actual requirement. A person of ordinary skill in the art may understand and implement the embodiments of this application without creative efforts.

The foregoing descriptions are merely a specific implementation of this application, and the protection scope of this application is not limited thereto. Any variation or replacement readily figured out by a person skilled in the art within the technical scope disclosed in this application shall fall within the protection scope of this application. Further combinations may be made to provide more implementations. based on the implementations provided in the foregoing aspects in this application. Therefore, the protection scope of this application shall be subject to the protection scope of the claims.

## Claims

1. A method for training a feature extraction model for pose identification, the method being executable by a computer device, and comprising:
obtaining a sample image comprising a plurality of key points, the key points having ground truth position coordinates and defining a pose of an object in the sample image;
performing feature extraction on the sample image by using an initial feature extraction model, to obtain features respectively corresponding to the plurality of key points;
determining, based on the features respectively corresponding to the plurality of key points, probability distributions respectively corresponding to the plurality of key points, the probability distribution describing probabilities that a respective key point is at various positions in the sample image;
performing sampling on the plurality of probability distributions, to obtain a plurality of samples;
performing fitting based on the plurality of samples by using an initial normalizing flow model, to obtain simulated probability distributions; and
adjusting a model parameter of the initial normalizing flow model and a model parameter of the initial feature extraction model based on a difference between the simulated probability distribution and a ground truth probability distribution, to obtain a feature extraction model corresponding to the initial feature extraction model, the ground truth probability distribution being determined based on the ground truth position coordinate of the key point corresponding to a respective one of the plurality of samples.

2. The method according to claim 1, wherein the method further comprises:
determining, based on the ground truth position coordinates of the plurality of key points, standard probability distributions respectively corresponding to the plurality of key points;
performing sampling on the standard probability distributions, to obtain a plurality of target sampling points; and
performing fitting based on the plurality of target sampling points by using the initial normalizing flow model, to obtain predicted probability distributions for the plurality of key points; and
the adjusting a model parameter of the initial normalizing flow model and a model parameter of the initial feature extraction model based on a difference between the simulated probability distribution and ground truth probability distribution comprises:
adjusting the model parameter of the initial normalizing flow model and the model parameter of the initial feature extraction model based on a first difference and a second difference, the first difference being the difference between the simulated probability distribution and the ground truth probability distribution, and the second difference being a difference between the predicted probability distribution and the standard probability distribution.

3. The method according to claim 2, wherein the method further comprises:
obtaining, based on the features respectively corresponding to the plurality of key points, optimal probability distributions respectively corresponding to the plurality of key points; and
the adjusting the model parameter of the initial normalizing flow model and the model parameter of the initial feature extraction model based on a first difference and a second difference comprises:
adjusting the model parameter of the initial normalizing flow model and the model parameter of the initial feature extraction model based on the first difference, the second difference, and a third difference, the third difference being a difference between the standard probability distribution and the optimal probability distribution.

4. The method according to claim 3, wherein the optimal probability distribution satisfies a Gaussian distribution or a Laplacian distribution in response to that the sample image is an image comprising a face of the object.

5. The method according to claim 3 or 4, wherein the adjusting the model parameter of the initial normalizing flow model and the model parameter of the initial feature extraction model based on the first difference, the second difference, and a third difference comprises:
determining an overall loss function based on the first difference, the second difference, the third difference, a first weight, and a second weight, the first weight being used for reducing a difference between the second difference and the first difference, and the second weight being used for reducing a difference between the third difference and the first difference; and
adjusting the model parameter of the initial normalizing flow model and the model parameter of the initial feature extraction model in a training direction of minimizing the overall loss function.

6. The method according to claim 5, wherein the method further comprises:
increasing the second weight to obtain an updated second weight in response to that a quantity of iterations is less than a preset threshold of iteration quantity and a difference between overall loss function values obtained in two consecutive model trainings is greater than a preset difference threshold.

7. The method according to any one of claims 1 to 6, wherein the performing sampling on the plurality of probability distributions, to obtain a plurality of samples comprises:
obtaining, for each of the plurality of probability distributions, a plurality of differentiable perturbed probabilities based on a plurality of probability values comprised in the probability distribution and random noises, the random noises following a Gumbel distribution; and
normalizing the plurality of perturbed probabilities based on an annealing parameter to obtain a sample corresponding to the probability distribution, the annealing parameter being used for reducing a learning rate in a training process.

8. An application method for a feature extraction model for pose identification, the method being executable by a computer device, and comprising:
obtaining a to-be-identified image;
performing feature extraction on the to-be-identified image by using the feature extraction model, to obtain features respectively corresponding to a plurality of to-be-identified key points comprised in the to-be-identified image, the feature extraction model being obtained through training by using the method according to any one of claims 1 to 7;
determining, based on the features respectively corresponding to the plurality of to-be-identified key points, probability distributions respectively corresponding to the plurality of to-be-identified key points; and
determining, based on the probability distributions respectively corresponding to the plurality of to-be-identified key points, position coordinates of the plurality of to-be-identified key points in the to-be-identified image.

9. An apparatus for training a feature extraction model for pose identification, the apparatus comprising: an obtaining unit, a feature extraction unit, a conversion unit, a sampling unit, a fitting unit, and an adjustment unit;
the obtaining unit being configured to obtain a sample image comprising a plurality of key points, the key points having ground truth position coordinates and defining a pose of an object in the sample image;
the feature extraction unit being configured to perform feature extraction on the sample image by using an initial feature extraction model, to obtain features respectively corresponding to the plurality of key points;
the conversion unit being configured to determine, based on the features respectively corresponding to the plurality of key points, probability distributions respectively corresponding to the plurality of key points, the probability distribution describing probabilities that a respective key point are is various positions in the sample image;
the sampling unit being configured to perform sampling on the plurality of probability distributions, to obtain a plurality of samples;
the fitting unit being configured to perform fitting based on the plurality of samples by using an initial normalizing flow model, to obtain simulated probability distributions; and
the adjustment unit being configured to adjust a model parameter of the initial normalizing flow model and a model parameter of the initial feature extraction model based on a difference between the simulated probability distribution and a ground truth probability distribution, to obtain a feature extraction model corresponding to the initial feature extraction model, the ground truth probability distribution being determined based on the ground truth position coordinate of the key point corresponding to a respective one of the plurality of samples.

10. An application apparatus for a feature extraction model for pose identification, the apparatus comprising: an obtaining unit, a feature extraction unit, a conversion unit, and an identification unit;
the obtaining unit being configured to obtain a to-be-identified image;
the feature extraction unit being configured to perform feature extraction on the to-be-identified image by using the feature extraction model, to obtain features respectively corresponding to a plurality of to-be-identified key points comprised in the to-be-identified image, the feature extraction model being obtained through training by using the method according to any one of claims 1 to 7;
the conversion unit being configured to determine, based on the features respectively corresponding to the plurality of to-be-identified key points, probability distributions respectively corresponding to the plurality of to-be-identified key points; and
the identification unit being configured to determine, based on the probability distributions respectively corresponding to the plurality of to-be-identified key points, position coordinates of the plurality of to-be-identified key points in the to-be-identified image.

11. A computer device, comprising a processor and a memory:
the memory being configured to store a computer program and transmit the computer program to the processor; and
the processor being configured to perform the method according to any one of claims 1 to 8 based on the computer program.

12. A computer-readable storage medium, configured to store a computer program, the computer program being configured for performing the method according to any one of claims 1 to 8.

13. A computer program product comprising a computer program, the computer program product, when running on a computer device, enabling the computer device to perform the method according to any one of claims 1 to 8.
